# FASCICULE DE BREVET EUROPEEN

(11) **EP 0 550 299 B1**
(45) Date de publication et mention de la délivrance du brevet: **30.08.1995**
(21) Numéro de dépôt: 92403246.9
(22) Date de dépôt: 01.12.1992
(51) Int. Cl.: B23K 26/00, B23D 15/00

(54) **Dispositif de cisaillage simultané de deux flans de tôle**
Vorrichtung zum gleichzeitigen Schneiden von zwei Blechen
Apparatus for simultaneously cutting two sheets

(30) Priorité: 19.12.1991 FR 9115822
(43) Date de publication de la demande: 07.07.1993
(73) Titulaire: SOLLAC, 92800 Puteaux (FR)
(72) Inventeur: Peru, Gilles, F-59240 Dunkerque (FR); Sauvage, Francis, F-59240 Dunkerque (FR); Le Roy, Yvon, F-59940 Le Doulieu (FR); Sion, Charles, F-59133 Camphin-en-Carembault (FR)
(74) Mandataire: Lanceplaine, Jean-Claude

(56) Documents cités:
- EP-A- 0 089 944
- EP-A- 0 405 143

## Description

La présente invention a pour objet un dispositif de cisaillage simultané de deux flans de tôle, notamment pour une installation de soudage par faisceau laser de deux flans de tôle placés bord à bord.

Les installations de soudage par faisceau laser de deux flans de tôle nécessitent un dispositif de cisaillage des bords à souder des flans de tôle, un dispositif de positionnement latéral du bord de l'un des flans de tôle dans le plan du faisceau laser, un dispositif d'accostage des deux flans de tôle bord à bord et enfin un dispositif de maintien bord à bord des deux flans de tôle et d'entraînement de ces deux flans au-dessous du faisceau laser.

Le dispositif de cisaillage peut être séparé de l'installation de soudage ou intégré dans cette installation.

Les dispositifs de cisaillage utilisés jusqu'à présent sont de deux types, soit ils effectuent le cissaillage successif des flans de tôles, soit ils effectuent le cisaillage simultané des deux flans de tôle destinés à être soudés bord à bord.

D'une manière générale, les dispositifs de cisaillage simultané de deux flans de tôle comprennent, pour chaque flan de tôle un ensemble formé, d'une part, par un organe support du flan de tôle correspondant associé à au moins un organe de maintien dudit flan de tôle sur ledit organe support et comportant une arête tranchante rectiligne et, d'autre part, par un couteau mobile muni d'une arête tranchante rectiligne destinée à coopérer avec l'arête tranchante de l'organe support correspondant.

Mais, ces dispositifs de cisaillage simultané ne permettent pas de positionner directement les bords découpés des flans de tôle dans le plan du faisceau laser ce qui nécessite une opération et un dispositif complémentaire de transfert et de positionnement de ces bords à souder.

La présente invention vise à remédier aux inconvénients précités des dispositifs de cisaillage connus en créant un dispositif de cisaillage par exemple intégré dans une installation de soudage par faisceau laser qui tout en étant d'une construction simple, permet de positionner les bords découpés des deux flans de tôle dans le plan dudit faisceau laser.

La présente invention a donc pour objet un dispositif de cisaillage simultané de deux flans de tôle comprenant, pour chaque flan de tôle, un ensemble formé, d'une part, par un organe support du flan de tôle correspondant associé à au moins un organe de maintien dudit flan de tôle sur ledit organe support et comportant une arête tranchante rectiligne et, d'autre part, par un couteau mobile muni d'une arête tranchante rectiligne destinée à coopérer avec l'arête tranchante de l'organe support correspondant, caractérisé en ce que les arêtes tranchantes des deux ensembles organe support-couteau sont situées dans un même plan de référence et les organes supports s'étendent de part et d'autre dudit plan de référence.

Selon d'autres caractéristiques de l'invention :
- les organes support sont formés d'une pièce monobloc comportant, de part et d'autre d'un plan de symétrie, une première surface plane supportant le flan de tôle correspondant et une deuxième surface plane située dans le plan de référence, l'intersection des deux surfaces planes formant l'arête tranchante de l'organe support correspondant,
- les surfaces planes supportant les flans de tôle sont parallèles entres elles,
- les surfaces planes supportant les flans de tôle sont parallèles au plan de symétrie,
- le plan de symétrie est perpendiculaire au plan de référence,
- le plan de référence est vertical.

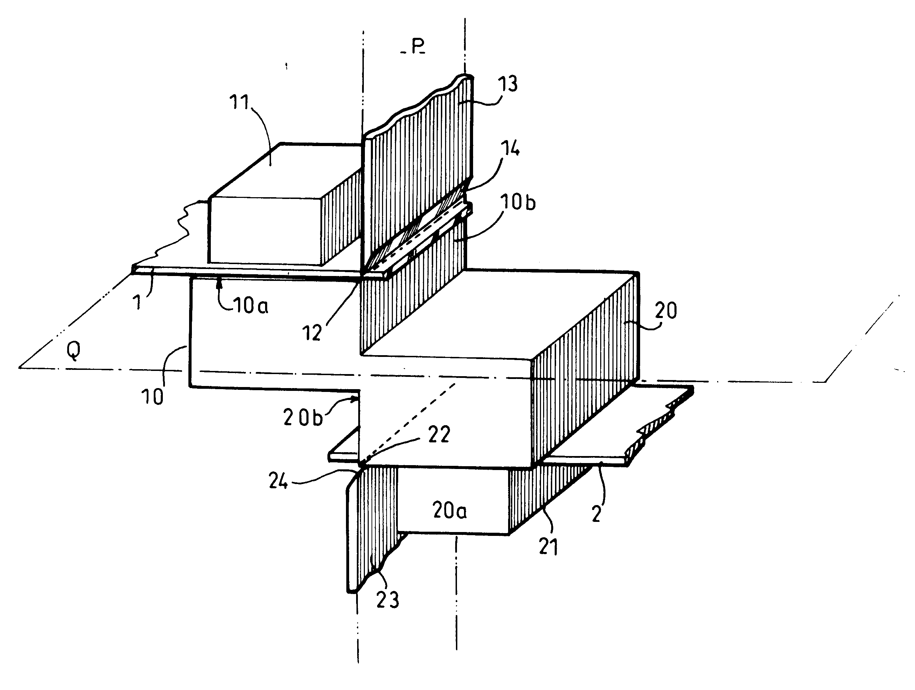

L'invention sera mieux comprise à la lumière de la description qui va suivre, faite en référence au dessin annexé, donné uniquement à titre d'exemple et surlequel la figure unique est une vue en perspective d'un mode de réalisation préférentiel du dispositif de cisaillage suivant l'invention.

Le dispositif de cisaillage simultané de deux flans de tôle 1 et 2 représenté au dessin est destiné à être intégré dans une installation de soudage par faisceau laser desdits flans de tôle placés bord à bord.

Ce dispositif de cisaillage comprend, pour le flan de tôle 1, un ensemble formé, d'une part, par un organe support 10 du flan de tôle 1 associé à au moins un organe de maintien 11 dudit flan de tôle sur ledit organe support et comportant une arête tranchante rectiligne 12 et, d'autre part, un couteau mobile 13 muni d'une arête tranchante rectiligne 14 destinée à coopérer avec l'arête tranchante 12 pour découper le bord à souder du flan de tôle 1.

De manière identique, le dispositif de cisaillage comprend, pour le flan de tôle 2, un ensemble formé, d'une part, par un organe support 20 du flan de tôle 2 associé à au moins un organe de maintien 21 dudit flan de tôle sur ledit organe support et comportant une arête tranchante rectiligne 32 et, d'autre part, un couteau mobile 23 muni d'une arête tranchante rectiligne 24 destinée à coopérer avec l'arête tranchante 22 pour découper le bord à souder du flan de tôle 2.

Les arêtes tranchantes 12 et 14 du premier ensemble organe support 10 - couteau 13 et les arêtes tranchantes 22 et 24 du second ensemble organe support 20 - couteau 23 sont situées dans un même plan de référence P et les organes support 10 et 20 s'étendent de part et d'autre dudit plan de référence P.

L'organe support 10 comporte une première surface plane 10a supportant le flan de tôle 1 et une deuxième surface plane 10b située dans le plan de référence P, l'intersection des deux surfaces planes 10a et 10b formant l'arête tranchante 12.

L'organe support 20 comporte une première surface plane 20a supportant le flan de tôle 2 et une deuxième surface plane 20b située dans le plan de référence P, l'intersection des deux surfaces planes 20a et 20b formant l'arête tranchante 22.

Selon un mode de réalisation préféré de l'invention représenté sur la figure unique, les organes support 10 et 20 sont formés d'une pièce monobloc comportant, d'un côté d'un plan de symétrie Q, la première surface plane 10a et la seconde surface plane 10b de l'organe support 10 et, de l'autre côté dudit plan de symétrie Q, la première surface plane 20a et la seconde surface plane 20b de l'organe support 20, lesdites surfaces planes 10b et 20b étant situées dans le plan de référence P.

Selon un autre mode de réalisation, les organes support 10 et 20 peuvent être constitués par deux pièces indépendantes et reliées entres elles de telle façon que les surfaces 10b et 20b soient situées dans le plan de référence P.

Les surfaces planes 10a et 20a supportant les flans de tôle 1 et 2 sont parallèles entres elles et sont éventuellement parallèles au plan de symétrie Q.

Par ailleurs, ce plan de symétrie Q peut être perpendiculaire au plan de référence P.

Le plan de référence P peut être vertical.

Le cisaillage des bords à souder des flans de tôle 1 et 2 est réalisé de la façon suivante.

Les flans de tôles 1 et 2 sont posés respectivement sur les surfaces planes 10a et 20a des organes support 10 et 20 de telle sorte que les bords à cisailler débordent des arêtes tranchantes 12 et 22 et sont maintenus dans cette position respectivement par les organes de maintien 11 et 21.

Ensuite, on fait descendre le couteau 13 et monter le couteau 23, ce qui découpe une chute sur chaque flan de tôle 1 et 2.

Grâce à la symétrie du dispositif de cisaillage et au fait que les arêtes tranchantes 12, 14 et 22, 24 se trouvent dans le même plan de référence P, les bords découpés des deux flans de tôle 1 et 2 sont donc positionnés dans ledit plan de référence P, qui dans une installation de soudage correspond au plan du faisceau laser.

Par conséquent, dès le cisaillage, les bords à souder des flans de tôle 1 et 2 sont prépositionnés et il suffit de les amener progressivement en contact l'un avec l'autre en les maintenant par un dispositif approprié dans le plan de référence, puis de les transférer ainsi positionnés bord à bord jusqu'au faisceau laser afin de les souder.

Le dispositif de cisaillage selon l'invention permet d'éviter, dans une installation de soudage par faisceau laser, le montage d'un dispositif de positionnement des bords à souder des deux flans de tôle après le cisaillage, ce qui simplifie l'installation et de ce fait réduit les risques de désalignement desdits bords par rapport au faisceau laser, contribuant ainsi à l'obtention d'une soudure de meilleure qualité.

## Revendications

1. Dispositif de cisaillage simultané de deux flans de tôle (1, 2), notamment pour une installation de soudage par faisceau laser des deux flans de tôle placés bord à bord, ledit dispositif comprenant, pour chaque flan de tôle (1, 2), un ensemble formé d'une part, par un organe support (10, 20) du flan de tôle (1, 2) correspondant associé à au moins un organe de maintien (11, 21) dudit flan de tôle sur ledit organe support et comportant une arête tranchante (12, 22) rectiligne et, d'autre part, par un couteau mobile (13, 23) muni d'une arête tranchante (14, 24) rectiligne destinée à coopérer avec l'arête tranchante (12, 22) de l'organe support (10, 20) correspondant, caractérisé en ce que les arêtes tranchantes (12, 14 et 22, 24) des deux ensembles organe support (10, 20) - couteau (13, 23) sont situées dans un même plan de référence P et les organes support (10, 20) s'étendent de part et d'autre dudit plan de référence P.

2. Dispositif selon la revendication 1, caractérisé en ce que les organes support (10, 20) sont formés d'une pièce monobloc comportant, de part et d'autre d'un plan de symétrie Q, une première surface plane (10a, 20a) supportant le flan de tôle (1, 2) correspondant et une deuxième surface plane (10b, 20b) située dans le plan de référence P, l'intersection des deux surfaces planes (10a, 10b) et (20a, 20b) formant l'arête tranchante (12, 22) de l'organe support (10, 20) correspondant.

3. Dispositif selon la revendication 2, caractérisé en ce que les surfaces planes (10a, 20a) supportant les flans de tôle (1, 2) sont parallèles entres elles.

4. Dispositif selon la revendication 2, caractérisé en ce que les surfaces planes (10a, 20a) supportant les flans de tôle (1, 2) sont parallèles au plan de symétrie Q.

5. Dispositif selon les revendications 2 et 4, caractérisé en ce que le plan de symétrie Q est perpendiculaire au plan de référence P.

6. Dispositif selon l'une quelconque des revendications précédentes, caractérisé en ce que le plan de référence P est vertical.

## Claims

1. Apparatus for the simultaneous cutting of two sheet blanks (1, 2), particularly for an installation for the laser beam welding of two sheet blanks placed edge to edge, said apparatus having for each sheet blank (1, 2) an assembly formed on the one hand by a support member (10, 20) of the corresponding sheet blank (1, 2) associated with at least one member (11, 21) for maintaining said sheet blank on said support member and having a rectilinear cutting edge (12, 22), and on the other hand a mobile cutter (13, 23) equipped with a rectilinear cutting edge (14, 24) for cooperating with the cutting edge (12, 22) of the corresponding support member (10, 20), characterized in that the cutting edges (12, 14 and 22 24) of the two support member (10, 20) - cutter (13, 23) assemblies are located in the same reference plane P and the support members (10, 20) extend on either side of said reference plane P.

2. Apparatus according to claim 1, characterized in that the support members (10, 20) are formed by a solid block having on either side of a plane of symmetry Q, a first planar surface (10a, 20a) supporting the corresponding sheet blank (1, 2) and a second planar surface (10b, 20b) located in the reference plane P, the intersection of the two planar surfaces (10a, 10b) and (20a, 20b) forming the cutting edge (12, 22) of the corresponding support member (10, 20).

3. Apparatus according to claim 2, characterized in that the planar surfaces (10a, 20a) supporting the sheet blanks (1, 2) are parallel to one another.

4. Apparatus according to claim 2, characterized in that the planar surfaces (10a, 20a) supporting the sheet blanks (1, 2) are parallel to the plane of symmetry Q.

5. Apparatus according to claims 2 and 4, characterized in that the plane of symmetry Q is perpendicular to the reference plane P.

6. Apparatus according to any one of the preceding claims, characterized in that the reference plane P is vertical.

## Patentansprüche

1. Vorrichtung zum gleichzeitigen Schneiden von zwei Blechplatten (1, 2), insbesondere für eine Einrichtung zum Zusammenschweißen zweier nebeneinander angeordneter Blechplatten mittels eines Laserstrahls, wobei die Vorrichtung für jede Blechplatte (1, 2) eine Anordnung aufweist, welche einerseits durch ein Haltemittel (10, 20) für die Blechplatte (1, 2), das mindestens mit einem Mittel (11, 21) zusammenwirkt, um die Blechplatte an dem Haltemittel zu befestigen, und eine geradlinig verlaufende Schneidkante (12, 22) hat, und andererseits durch ein bewegliches Messer (13, 23) gebildet ist, das mit einer geradlinigen Schneidkante (14, 24) versehen ist, die dazu ausgestaltet ist, mit der entsprechenden Schneidkante (12, 22) des Haltemittels (10, 20) zusammenzuwirken, **dadurch gekennzeichnet,** daß die Schneidkanten (12, 14 und 22, 24) der beiden Haltemittel (10, 20) und Messer (13, 23) umfassenden Anordnungen in einer gleichen Referenzebene P liegen und daß sich die Haltemittel (10, 20) von der Referenzebene P zu beiden Seiten erstrecken.

2. Vorrichtung nach Anspruch 1, **dadurch gekennzeichnet,** daß die Haltemittel (10, 20) aus einem Stück ausgebildet sind, welches auf beiden Seiten eine Symmetrieebene Q hat, daß eine erste ebene Fläche (10a, 20a) die entsprechende Blechplatte (1, 2) hält und eine zweite ebene Fläche (10b, 20b) in der Referenzebene P liegt und daß durch die Schnittlinie der beiden ebenen Flächen (10a, 10b) und (20a, 20b) die Schneidkante (12, 22) des entsprechenden Haltemittels (10, 20) gebildet ist.

3. Vorrichtung nach Anspruch 2, **dadurch gekennzeichnet,** daß die ebenen Flächen (10a, 20a), die die Blechplatten (1, 2) halten, parallel zueinander verlaufen.

4. Vorrichtung nach Anspruch 2**, dadurch gekennzeichnet,** daß die ebenen Flächen (10a, 20a), die die Blechplatten (1, 2) halten, parallel zur Symmetrieebene Q verlaufen.

5. Vorrichtung nach einem der Ansprüche 2 und 4, **dadurch gekennzeichnet,** daß die Symmetrieebene Q senkrecht zur Referenzebene P verläuft.

6. Vorrichtung nach einem der vorhergehenden Ansprüche, **dadurch gekennzeichnet,** daß die Referenzebene P vertikal verläuft.
